# FASCICULE DE BREVET EUROPEEN

(11) **EP 0 497 689 B1**
(45) Date de publication et mention de la délivrance du brevet: **19.04.1995**
(21) Numéro de dépôt: 92400222.3
(22) Date de dépôt: 29.01.1992
(51) Int. Cl.: B65B 35/38, B65G 47/91

(54) **Machine de mise en caisse de doses unitaires**
Vorrichtung zum Verpacken von Portionsverpackungen in Kisten
Apparatus for packing portions packs in cases

(30) Priorité: 29.01.1991 FR 9100950
(43) Date de publication de la demande: 05.08.1992
(73) Titulaire: Etablissements Cazas, 93000 Bobigny (FR)
(72) Inventeur: Cazas, Francis, F-94440 Santeny (FR)
(74) Mandataire: Viard, Jean

(56) Documents cités:
- FR-A- 2 612 487
- GB-A- 2 092 090
- US-A- 2 544 125

## Description

La présente invention a pour objet une machine de groupage et de mises en caisse de produits, notamment alimentaires, permettant l'encaissage automatique d'un grand nombre de doses unitaires, lesdites doses pouvant être regroupées en "packs" ou paquets de quatre, six, huit, etc...

Des progrès considérables ont été effectués dans la préparation et le conditionnement de doses unitaires de produits destinées à la consommation. Mais il importe que ces produits constituant des doses unitaires de volume variable puissent être regroupés et emballés dans des caisses généralement en carton. Les caisses sont ensuite acheminées vers les différents points de distribution. La fabrication atteint maintenant des cadences très rapides et il est souhaitable qu'en fin des chaînes de fabrication, des machines prennent le relais pour assurer la mise en caisse automatique des produits ainsi fabriqués aux mêmes cadences.

Des machines de mise en caisse sont déjà connues dans lesquelles deux tapis sont disposés parallèlement, l'un amenant les récipients et l'autre amenant des caisses vides. La machine prélève sur le tapis convoyeur un nombre déterminé de récipients et les dépose dans une caisse par une série de mouvements d'un préhenseur : descente, remontée, translation, descente et remontée, puis translation. Ces mouvements sont relativement lents par rapport aux cadences des machines de production. Par ailleurs, ils nécessitent des transporteurs parallèles. Or, dans certaines unités de production, la place disponible est limitée.

FR-A-2 612 487 décrit une machine d'encaissage. Les têtes de préhension sont montées sur un convoyeur sans fin se déplaçant de façon continue alors que le tapis convoyeur de caisses est à mouvement discontinu. Les tapis d'amenée des produits et d'évacuation des caisses chargées sont parallèles et à circulation de sens inverse.

Dans GB-A-2 092 090, le prélèvement des produits et leur dépose sont effectués par deux bras pivotants entraînés par une came. L'extension latérale des bras et le déplacement vertical des têtes conduit à un mécanisme compliqué.

Le volume des doses ainsi que leurs formes varient considérablement et il est souhaitable de disposer de machines présentant une grande souplesse de fonctionnement pouvant s'adapter à des conditionnements différents, ainsi qu'à des regroupements divers permettant l'introduction desdits produits dans des caisses standardisées.

La présente invention a pour objet une machine de groupage et de mise en caisse permettant de pallier les inconvénients des machines connues et d'obtenir une grande souplesse d'utilisation avec un encombrement limité.

Selon la présente invention, la machine de mise en caisse de doses unitaires de produits groupées comprenant un tapis d'entrée équipé de moyens de groupage, un tapis de sortie recevant des caisses vides et des moyens de préhension des doses mobiles entre le tapis d'entrée et le tapis de sortie est caractérisé en ce que les moyens de préhension sont constitués par une croix animée d'un mouvement alternatif vertical dont les extrémités des branches portent des têtes de préhension, la croix tournant autour d'un axe vertical par quarts de tours dans un sens unique.

Ainsi, le dispositif préhenseur va prendre un ensemble de doses unitaires, les soulever et par une rotation appropriée l'amener au-dessus d'une caisse vide. Le dispositif préhenseur descend alors les doses dans la caisse et les dépose dans le fond de celle-ci, un lit complémentaire de produits pouvant être amené au-dessus du premier lit de récipients, toujours par rotation, par un second bras de l'organe préhenseur. Il est possible de travailler en "temps masqué".

Bien entendu, la hauteur de laquelle se déplace le préhenseur doit être réglée en fonction de la hauteur des produits à déposer dans la caisse et également en fonction du lit qui est à déposer.

Aussi, selon une autre caractéristique de l'invention, le dispositif préhenseur est monté sur un arbre entraîné alternativement en rotation et translation verticale par un arbre tournant sur une came, ladite came étant elle-même montée sur un arbre d'entraînement.

Pratiquement, l'entraînement séquentiel en rotation de l'organe préhenseur est obtenu par un indexeur à deux arbres parallèles tel que celui qui est fabriqué par la société italienne BETTINELLI. Par un jeu de cames, il est possible grâce à cet indexeur d'obtenir un mouvement de rotation non continu d'un arbre mené à partir de la rotation en continu d'un arbre menant. L'indexeur permet ainsi d'avoir des périodes d'entraînement séparées par des périodes d'arrêt de la rotation. Ces périodes d'arrêt permettent de procéder au chargement des têtes de préhension et à leur déchargement. Comme cela sera décrit par la suite, les arbres de l'indexeur sont des arbres creux. L'arbre d'entraînement qui est indexé entraîne d'une part la croix constituant le préhenseur et, d'autre part fait monter et descendre alternativement cette croix.

Un seul axe permet la rotation des têtes de préhension et le prélèvement et la dépose des objets.

D'autres caractéristiques et avantages de l'invention apparaîtront au cours de la description qui va suivre d'un mode particulier de réalisation, donné uniquement à titre d'exemple non limitatif, en regard des figures qui représentent :
- La figure 1, un schéma synoptique de la machine d'encaissage selon l'invention;
- la figure 2, une vue en coupe verticale du mécanisme de déplacement en hauteur de l'organe préhenseur;
- la figure 3, une vue de côtés du même dispositif;
- les figures 4 et 5, un distributeur d'air;
- les figures 6, 7 et 8 des vues d'une tête de préhension.

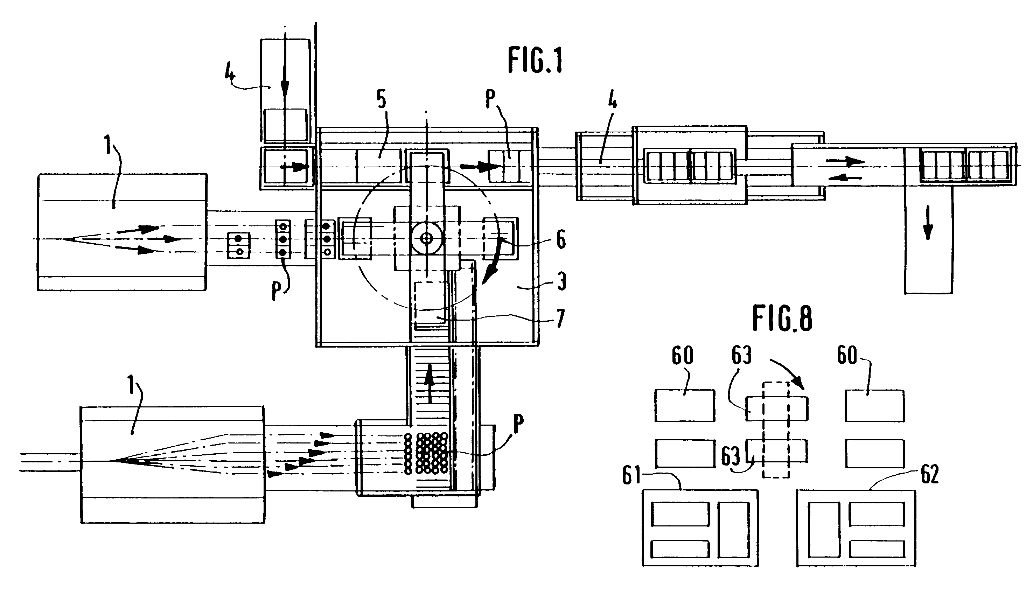

La figure 1 représente schématiquement une machine selon l'invention en vue par-dessus. Sur cette machine, on distingue un tapis d'entrée 1 qui reçoit les doses à encaisser et les trie de manière à constituer des lits de récipients dont les dimensions soient compatibles avec celles des caisses utilisées. Dans l'exemple représenté la machine comprend deux tapis d'entrée 1 qui se terminent en deux positions perpendiculaires au-dessous du distributeur ou préhenseur 3. Un convoyeur 4 amène les caisses vides 5 au-dessous de l'une des positions d'arrêt du préhenseur 3 et, après remplissage des caisses 5 poursuit son trajet jusqu'à une plateforme de stockage. Il serait également possible de prévoir trois convoyeurs ou tapis d'entrée, un convoyeur étant perpendiculaire au convoyeur adjacent.

La fonction du préhenseur 3 est donc de prendre un lit de doses unitaires sur l'un des deux tapis d'entrée 1 ou sur les deux et de déposer successivement les lits ainsi prélevés dans des caisses vides 5. Le dispositif 3 comporte un plateau tournant 6. Le plateau tournant 6 est constitué par une croix comportant quatre branches ou bras préhenseurs. Cette caractéristique a pour but d'alléger le plateau 6. Des moyens de préhension 7 sont disposés aux extrémités de chacune des branches de la croix 6. Ces moyens de préhension consistent, par exemple, en des ventouses reliées à des canalisations de vide comme cela sera expliqué ultérieurement.

Dans l'exemple représenté, la croix tourne dans le sens horaire et, deux postes de chargement 1 sont prévus, la croix effectuant un quart de tour à chaque pas d'un cycle.

Le dispositif préhenseur doit comme indiqué précédemment prendre sur un ou plusieurs postes de chargement un lit de doses et le transporter à l'intérieur d'une caisse vide. Pour ce faire, on doit dans un premier temps saisir l'ensemble des doses d'un lit soulever cet ensemble au-dessus du dispositif convoyeur, puis, par rotation l'amener au-dessus d'une caisse vide 5 et descendre le lit de manière à ce que celui-ci soit déposé aussi délicatement que possible dans le fond de la caisse ou sur un lit déjà disposé dans celle-ci. A cet effet, le préhenseur doit pouvoir monter et descendre par rapport au plan horizontal défini d'une part par la surface supérieure des convoyeurs d'entrée 1 et, d'autre part par le fond des caisses 5.

Une des difficultés de ce type de machines est qu'elles doivent être propres à mettre en caisse des produits de hauteurs différentes. En effet, différents produits sont conditionnés dans des récipients dont la contenance et dont la hauteur peuvent être variables. Il faut donc que la machine puisse s'adapter aisément à ces hauteurs variables et par suite que la course verticale du préhenseur puisse également être modifiée.

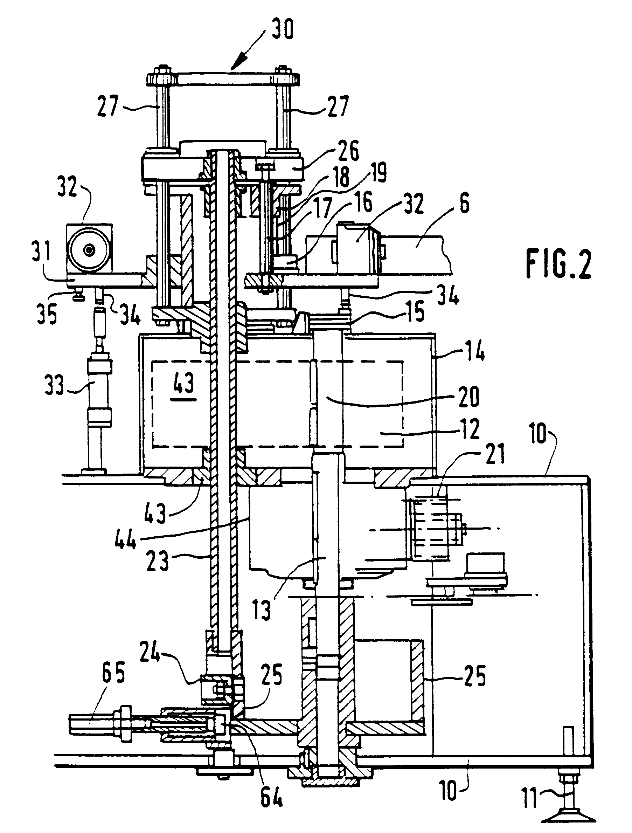

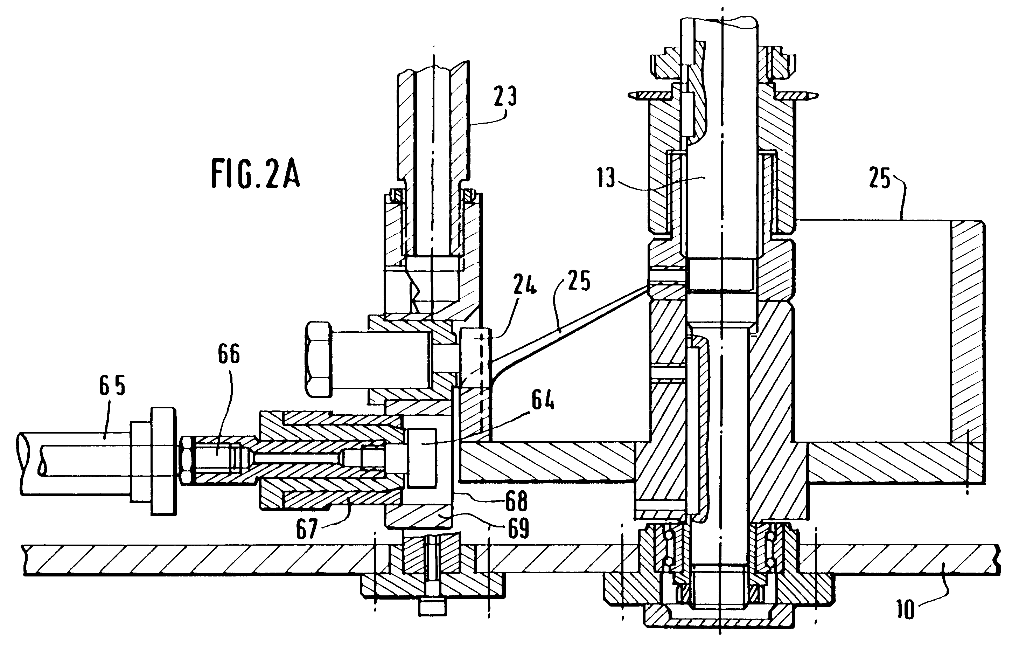

On a représenté sur la figure 2 un dispositif permettant d'obtenir aisément cette variation de course. Sur la figure 2, à l'intérieur d'un châssis 10 reposant sur des pieds réglables 11 est tourilloné un arbre à came 13 traversant un indexeur de plateau 12. L'indexeur de plateau est contenu à l'intérieur d'un capot 14, présentant à sa partie supérieure un embout 15.

L'indexeur 12 est un organe mécanique disponible dans le commerce permettant de transformer le mouvement circulaire continu de l'arbre 13 en un mouvement circulaire discontinu d'un arbre 23. A la partie supérieure de l'arbre 23 est montée une tourelle 30.

A partir de la tourelle 30 qui est axée sur l'arbre 23, s'étendent les bras de préhension 6 dont un seul est représenté partiellement sur la figure 2. La liaison mécanique entre l'arbre 20 et l'arbre 23 est symbolisée par un rectangle en pointillés et par la représentation de clavettes.

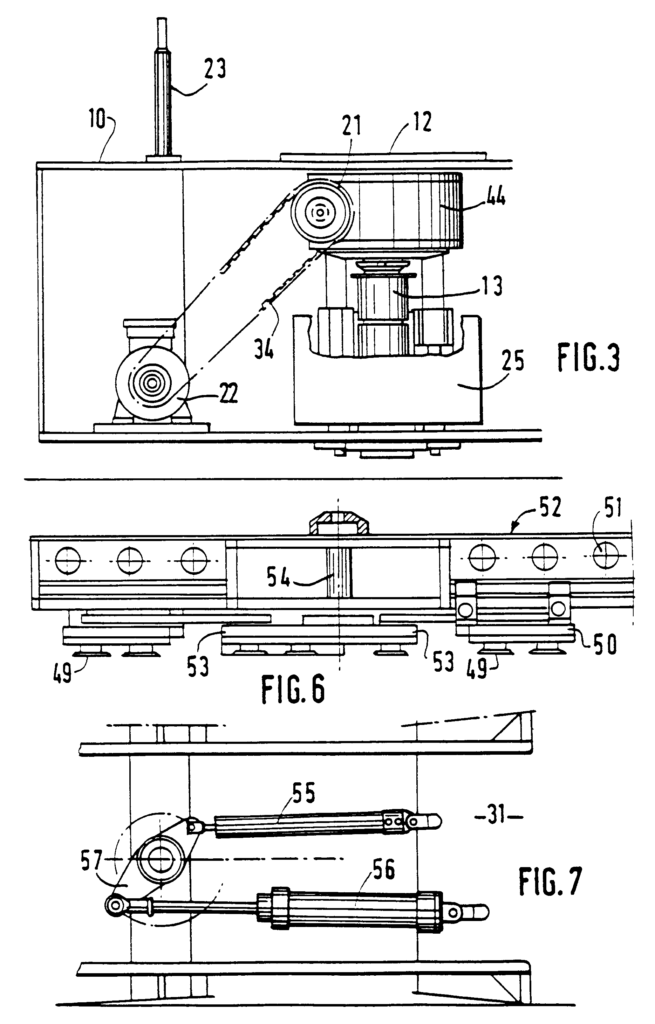

Au-dessus du capot d'indexeur 14 on distingue dans la tourelle 30 un palier mobile 16, un arbre mobile 17 et un palier fixe 18 solidaire d'un support intermédiaire de tourelle 19. L'arbre vertical 13 est entraîné en rotation par une poulie 21 qui est elle-même entraînée par un moteur 22 (figure 3) par l'intermédiaire d'une courroie crantée 34. Parallèlement à cet arbre 13 est monté, dans des paliers appropriés 43, un axe faisant fonction de poussoir 23 dont l'extrémité inférieure est solidaire d'un galet 24 qui porte sur la surface supérieure d'une came 25 solidaire de l'arbre 13. C'est le déplacement du galet 24 sur la came 25 qui produit la course verticale du poussoir 23 et par suite du plateau mobile 26 qui est par ailleurs guidé sous des colonnettes 27 réunies à leurs parties supérieures par une entretoise 28. Le plateau mobile 26 entraîne en translation verticale la table 31 portant les bras de préhension 6 par les supports 19. Ainsi, pour changer la course il suffit de changer la came. A cet effet, la came est simplement montée par un clavetage sur l'arbre 13. Sous l'influence du déplacement du galet 24 sur la came 25, la tige poussoir effectue un mouvement alternatif vertical qu'elle répercute sur le plateau 26 qui coulisse sur les colonnettes 27. Lorsque la course verticale du préhenseur doit être modifiée, il suffit de bloquer la croix 6 en position haute et de changer la came en extrayant l'arbre 13, 20 à travers l'orifice 15 du capot 14, de charger le plateau de came, puis de remonter l'arbre.

Bien entendu, comme indiqué précédemment, l'arbre menant de l'indexeur est creux ce qui permet de démonter l'arbre 13 en le faisant glisser à l'intérieur de l'indexeur.

Sur la figure 3, on voit que le moteur 22 est relié par une courroie crantée 34 à la poulie 21 qui par l'intermédiaire d'un réducteur limiteur de couple 44 est relié à la platine indexeur 12. La sortie du réducteur 44 est reliée au pignon de l'arbre à came 13.

Ainsi, l'arbre à came 13 est entraîné en rotation d'une manière continue pendant le fonctionnement de la machine alors que l'arbre 23 arrête sa rotation lorsqu'il monte ou descend.

Dans de telles machines, il est nécessaire de pouvoir aspirer instantanément une grande quantité de doses unitaires et, par exemple quarante huit. A cet effet, les têtes de préhension comprennent, par exemple, quarante huit ventouses portées par une tête rectangulaire 7. Pour que la préhension soit convenable, il faut que ces ventouses soient alimentées simultanément. Cela nécessite des conduits d'aspiration de diamètre notable et il s'est avéré que les électrovannes disponibles ne permettaient pas pratiquement d'obtenir une telle alimentation à un coût acceptable.

Aussi, selon une autre caractéristique de l'invention, les distributeurs portés par le plateau tournant sont commandés par des vérins fixés sur le châssis 10.

Comme cela apparaît sur la figure 2, le centre 31 du plateau central tournant portant la tourelle 30 et les bras 6 est muni de distributeurs 32 de commande de vide. L'alimentation en vide se fait par des conduits passant à travers le centre de la tourelle 30 et l'aspiration est commandée par des distributeurs 32 qui, dans l'exemple représenté sont au nombre de quatre.

Ces distributeurs sont eux-mêmes commandés dans des positions déterminées par des vérins pneumatiques 33 fixés sur le châssis 10 dans des positions correspondant au chargement ou au déchargement des doses ou récipient. Les vérins 33 sont eux-mêmes commandés par des détecteurs de présence de récipients (non représentés) de sorte que la liaison des ventouses à la source de vide ne se produise pas que si les packs de récipients sont présents sur le tapis convoyeur 1 en nombre voulu.

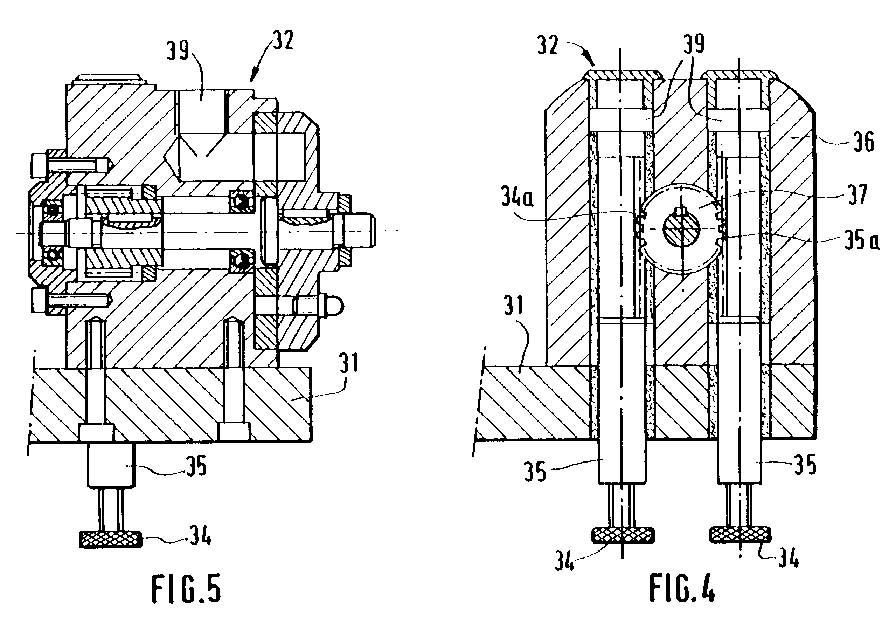

Un distributeur de vide 32 est représenté en coupe sur les figures 4 et 5 respectivement en vue de face et en vue de côté. A l'intérieur d'un carter 36 sont montées coulissantes deux tiges respectivement 34 et 35 dont les parties internes 34a et 35a forment une crémaillère .

Les dents 36 engrènent avec une roue dentée 37 montée sur un arbre 38. La canalisation de vide est connectée au conduit 39 et les ventouses sont raccordées à un autre conduit non représenté. Les tiges 35 et 34 qui sont alternativement montées et descendues de manière à obstruer ou ouvrir les canalisations qui sont de diamètre important pour permettre le déplacement d'un flux d'air également important. Les tiges 34 et 35 sont actionnées par les tiges 40 des vérins 33 par contact des têtes, le plateau 6 étant à ce moment au repos.

Les figures 6 et 7 représentent respectivement en élévation et en vue par-dessus une tête de préhension destinée à être montée sur une branche 7 du dispositif 6 en vue de réaliser certains chargements particuliers tel que celui qui est représenté sur la fig.8. Sur la figure 6, on distingue à la partie inférieure un ensemble de ventouses 49 montées sur une platine 50 chacune d'elle étant reliée à une canalisation de vide 51 montée à l'intérieur de la tête 52. Dans la partie centrale de la Fig.6, la moitié droite représente la position normale de la platine centrale et la moitié gauche la position de la platine centrale après pivotement.

Selon une caractéristique de l'invention, la partie centrale 53 de la tête 52 est mobile en rotation de manière à permettre une rotation de la position des ventouses de la région centrale . A cet effet, la platine centrale 53 est montée pivotante autour d'un axe 54 et le déplacement de l'axe 54 est effectué comme représenté sur la figure 7 par l'intermédiaire d'un frein hydraulique 55 et d'un vérin pneumatique 56 dont les corps sont montés pivotants sur la partie centrale 31 de la tourelle et dont les tiges de piston sont montées pivotantes sur un maneton 57. Ainsi, comme représenté sur la figure 7 l'axe 54 peut être pivoté de 90 ° par extension et rétraction des tiges des vérins 55 et 56. Il est ainsi possible de disposer dans une caisse des doses unitaires en faisant pivoter certaines par rapport à l'ensemble des autres comme cela sera expliqué en regard de la figure 8.

Mais, pour que la partie centrale puisse tourner, il faut que les parties latérales soient mobiles de manière à changer d'entr'axe. Cette mobilité résulte de la présence de bras extenseurs (non représentés) montés pivotants d'une part sur la platine centrale et, d'autre part sur les platines latérales.

Le mode de fonctionnement d'une telle tête de préhension est le suivant : comme cela apparaît sur le schéma de la Fig.8, on prélève à l'aide d'une tête de préhension un ensemble de six packs 60 parallèles l'un à l'autre, la rotation de la platine centrale de la tête pendant le déplacement angulaire d'un quart de tour produit la mise en position verticale sur le dessin des deux packs centraux ce qui permet le chargement de deux caisses 61, 62 dans chacune desquelles sont répartis trois packs comme représenté sur le dessin.

## Revendications

1. Machine de mise en caisse de doses unitaires de produit groupées comprenant un tapis d'entrée (1) équipé de moyens de groupage, un tapis de sortie (4) recevant des caisses vides (5) et des moyens de préhension (3) des doses mobiles entre le tapis d'entrée et le tapis de sortie, caractérisée en ce que les moyens de préhension (3) sont constitués par une croix (6) animée d'un mouvement alternatif vertical dont les extrémités des branches portent des têtes de préhension (7), la croix (6) tournant autour d'un axe vertical par quarts de tours dans un sens unique.

2. Machine selon la revendication 1, caractérisée en ce que la croix (6) est solidaire d'un plateau (26) animé d'un mouvement vertical alternatif par une tige poussoir (23) reposant par un galet (24), sur une came (25) solidaire de l'arbre (20) d'entraînement en rotation de la croix (6).

3. Machine selon l'une des revendications 1 ou 2, caractérisée en ce qu'une tête de préhension (7) comprend un ensemble de ventouses (49) montées sur trois platines (50, 53), la platine centrale (53) étant pivotante sur la tête et les platines latérales coulissantes.

4. Machine selon la revendication 3, caractérisée en ce que le plateau (26) porte des distributeurs de vide (32) montés entre les ventouses (49) et une source de vide, les distributeurs (32) étant commandés par des vérins (33) fixés sur le bâti de la machine.

5. Machine selon la revendication 2, caractérisée en ce qu'un second galet (64) est disposé au-dessous du galet (24), la substitution du galet (24) au galet (64) produisant une variation de la course verticale de préhension des doses.

## Claims

1. A machine for boxing grouped-together discrete units of product, the machine comprising a supply line (1) provided with grouping means, a delivery line (4) for empty boxes (5), and unit-gripping means (3) movable between the supply line and the delivery line, the machine being characterized in that the gripping means (3) is constituted by a cross (6) which is movable in vertical alternating motion and having gripping heads (7) mounted at the ends of its branches, the cross (6) rotating about a vertical axis through quarter turns in one direction only.

2. A machine according to claim 1, characterized in that the cross (6) is secured to a plate (26) which is moved in an alternating vertical motion by a pusher rod (23) bearing on a cam (25) via a cam follower (24), the cam being secured to the rotary drive shaft (20) of the cross (6).

3. A machine according to claim 1 or claim 2, characterized in that a gripping head (7) comprises an assembly of suction cups (49) mounted on three plates (50, 53), the central plate (53) being pivotally mounted on the head and the lateral plates being slidably mounted.

4. A machine according to claim 3, characterized in that the plate (26) carries vacuum distributors (32) mounted between the suction cups (49) and a vacuum source, the distributors (32) being controlled by cylinders (33) which are fixed on the frame of the machine.

5. A machine according to claim 2, characterized in that a second cam follower (64) is located below cam follower (24), substitution of cam follower (24) by cam follower (64) producing a change in the vertical travel of the unit gripping means.

## Patentansprüche

1. Vorrichtung zum Verpacken von zusammengestellten Portionseinheiten von Erzeugnissen in Kisten, die ein mit Mitteln zum Zusammenstellen ausgerüstetes Eingangsband (1), ein Ausgangsband (4), welches leere Kisten (5) aufnimmt, und Mittel zum Greifen (3) von bewegten Portionen zwischen dem Eingangsband und dem Ausgangsband beinhaltet, dadurch gekennzeichnet, daß die Mittel zum Greifen (3) aus einem in eine abwechselnde vertikale Bewegung versetzten Kreuz (6) bestehen, dessen Greifarmenden Greifköpfe (7) tragen, wobei sich das Kreuz (6) in Viertelumdrehungen in einer bestimmten Richtung um eine vertikale Achse dreht.

2. Vorrichtung nach Anspruch 1, dadurch gekennzeichnet, daß das Kreuz (6) mit einer Platte (26) fest verbunden ist, die durch eine Schubstange (23) in eine abwechselnde vertikale Bewegung versetzt wird, wobei die Stange über eine Rolle (24) auf einer Nockenkurve (25) liegt, die mit der Welle (20), die das Kreuz (6) in Rotation versetzt, fest verbunden ist.

3. Vorrichtung nach einem der Ansprüche 1 oder 2, dadurch gekennzeichnet, daß ein Greifkopf (7) ein Ensemble von Saugnäpfen (49) beinhaltet, die auf drei Halteplatten (50, 53) angebracht sind, wobei die mittlere Halteplatte (53) schwenkbeweglich auf dem Kopf gelagert ist und die seitlichen Halteplatten verschiebbar sind.

4. Vorrichtung nach Anspruch 3, dadurch gekennzeichnet, daß die Halteplatte (26) Unterdruckverteiler (32) trägt, die zwischen den Saugnäpfen (49) und einer Unterdruckquelle angebracht sind, wobei die Verteiler (32) durch Zylinder (33) gesteuert werden, die auf dem Rahmen der Vorrichtung befestigt sind.

5. Vorrichtung nach Anspruch 2, dadurch gekennzeichnet, daß eine zweite Rolle (64) unterhalb der Rolle (24) angeordnet ist, wobei der Ersatz der Rolle (24) durch die Rolle (64) eine Variation des vertikalen Greifbewegungsverlaufs für die Portionen bewirkt.
